# EUROPÄISCHE PATENTANMELDUNG

(11) **EP 4 331 334 A1**
(43) Veröffentlichungstag der Anmeldung: **06.03.2024**
(21) Anmeldenummer: 23186358.0
(22) Anmeldetag: 19.07.2023
(51) Int. Cl.: A01B 76/00, A01D 41/12, A01D 41/127, A01D 43/08, A01D 67/00, B60K 28/04, B60N 2/00, B60R 25/00, B60W 40/08, B62D 49/00

(54) **LANDWIRTSCHAFTLICHE ARBEITSMASCHINE**

(30) Priorität: 02.09.2022 DE 102022122297
(71) Anmelder: CLAAS Tractor S.A.S., 78141 Vélizy-Villacoublay Cedex (FR)
(72) Erfinder: Bruere, Christophe, 78390 Bois dÀrcy (FR)
(74) Vertreter: CLAAS Gruppe

(57) **Zusammenfassung**

Die Erfindung betrifft eine landwirtschaftliche Arbeitsmaschine mit einer Fahrerkabine (5), wobei die landwirtschaftliche Arbeitsmaschine (1) eine Steueranordnung (2) und Elektronik (4) in der Fahrerkabine (5) aufweist, wobei die landwirtschaftliche Arbeitsmaschine (1) mindestens einen Sensor (6) aufweist, mit dem ein Nutzer (7) lokalisierbar ist. Es wird vorgeschlagen, dass die Steueranordnung (2) in einem inaktiven Zustand der landwirtschaftlichen Arbeitsmaschine (1) eine Nutzerlokalisierungsroutine (3) durchführt, dass die Steueranordnung (2) in der Nutzerlokalisierungsroutine (3) anhand von Sensordaten des Sensors (6) prüft, ob der Nutzer (7) die landwirtschaftliche Arbeitsmaschine (1) besteigt und/oder die Fahrerkabine (5) betritt, dass die Steueranordnung (2) bei positivem Ergebnis der Prüfung zumindest einen Elektronikbestandteil (9) der Elektronik (4) in der Fahrerkabine (5) aus einem inaktiven Zustand in einen aktiveren Zustand versetzt.

## Beschreibung

Die vorliegende Erfindung betrifft eine landwirtschaftliche Arbeitsmaschine gemäß dem Oberbegriff von Anspruch 1.

Der bekannte Stand der Technik (DE 10 2020 124 991 A1), von dem die Erfindung ausgeht, betrifft eine landwirtschaftliche Arbeitsmaschine gemäß dem Oberbegriff von Anspruch 1.

Im Vordergrund stehen vorliegend landwirtschaftliche Arbeitsmaschinen aller Art. Dies betrifft Zugmaschinen, insbesondere Traktoren, aber auch Erntemaschinen wie Mähdrescher und Feldhäcksler.

Bei derartigen landwirtschaftlichen Arbeitsmaschinen sind in der Fahrerkabine diverse Elektronikbestandteile vorhanden. Beispielsweise weisen landwirtschaftliche Arbeitsmaschinen oft ein oder mehrere Displays auf. Steigt ein Nutzer in die landwirtschaftliche Arbeitsmaschine ein, dauert das Hochfahren der Elektronik eine gewisse Zeit. Heutzutage ist der Nutzer jedoch immer mehr daran gewöhnt, elektronische Geräte auf Knopfdruck sofort zur Verfügung zu haben.

Bei landwirtschaftlichen Arbeitsmaschinen ist beispielsweise aus der DE 10 2020 124 991 A1 bekannt, Elektronikbestandteile in einen Ruhemodus zu versetzen und abhängig von einer Nutzeraktion aufzuwecken. Es verbleibt jedoch das Problem, dass die Elektronikbestandteile oft zu langsam reagieren.

Aus dem Automobilbereich ist bekannt, Elektronikbestandteile abhängig von einer Nutzerposition aufzuwecken. Diese Systeme lassen sich jedoch nicht auf landwirtschaftliche Arbeitsmaschinen übertragen, da dort häufig ein autorisierter Nutzer in der Nähe der landwirtschaftlichen Arbeitsmaschine arbeitet oder an dieser vorbeigeht. Die landwirtschaftliche Arbeitsmaschine dann jeweils aufzuwecken, ist keine Lösung.

Es ist dabei eine Herausforderung, den bekannten Stand der Technik zu verbessern.

Der Erfindung liegt das Problem zugrunde, die bekannte landwirtschaftliche Arbeitsmaschine derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, dass eine landwirtschaftliche Arbeitsmaschine deutlich größer ist als ein Automobil. Das Betreten der Fahrerkabine geht daher beispielsweise mit einem Erklimmen einer Leiter einher. Dieses kann detektiert werden und bietet einen sehr guten Indikator dafür, dass eine Nutzung der landwirtschaftlichen Arbeitsmaschine tatsächlich geplant ist. Insbesondere falls diese Erkennung fehlschlägt, kann zusätzlich oder alternativ auch ein Betreten der Fahrerkabine erkannt werden. Zwischen dem Betreten der Fahrerkabine und der Nutzung der Elektronikbestandteile der Fahrerkabine vergeht häufig noch ausreichend Zeit, um die Elektronikbestandteile hochzufahren.

Die Erfindung betrifft eine landwirtschaftliche Arbeitsmaschine mit einer Fahrerkabine, wobei die landwirtschaftliche Arbeitsmaschine eine Steueranordnung und Elektronik in der Fahrerkabine aufweist, wobei die landwirtschaftliche Arbeitsmaschine mindestens einen Sensor aufweist, mit dem ein Nutzer lokalisierbar ist.

Die Steueranordnung weist hier und vorzugsweise Elektronik auf, die Teil der landwirtschaftlichen Arbeitsmaschine ist und die hier und vorzugsweise zumindest teilweise in der Fahrerkabine angeordnet ist. Die Elektronik in der Fahrerkabine kann Teil der Steueranordnung sein und/oder mit dieser zusammenarbeiten.

Der Begriff "in der Fahrerkabine" ist weit zu verstehen. Umfasst ist jegliche Elektronik, auf die der Nutzer aus der Fahrerkabine heraus Zugriff hat. Es reicht somit, wenn beispielsweise ein Display in der Fahrerkabine angeordnet ist, der eigentliche Prozessor, der in einen aktiveren Zustand versetzt wird, jedoch bspw. im Bauch der landwirtschaftlichen Arbeitsmaschine angeordnet ist.

Der Sensor ist dazu geeignet, den Nutzer grob zu lokalisieren. Die Erkenntnis, dass der Nutzer gerade die landwirtschaftliche Arbeitsmaschine besteigt, ist jedoch ausreichend, es muss nicht zwingend möglich sein, zu erkennen, wo exakt der Nutzer die landwirtschaftliche Arbeitsmaschine besteigt.

Im Einzelnen wird vorgeschlagen, dass die Steueranordnung in einem inaktiven Zustand der landwirtschaftlichen Arbeitsmaschine eine Nutzerlokalisierungsroutine durchführt, dass die Steueranordnung in der Nutzerlokalisierungsroutine anhand von Sensordaten des Sensors prüft, ob der Nutzer die landwirtschaftliche Arbeitsmaschine besteigt und/oder die Fahrerkabine betritt, dass die Steueranordnung bei positivem Ergebnis der Prüfung zumindest einen Elektronikbestandteil der Elektronik in der Fahrerkabine aus einem inaktiven Zustand in einen aktiveren Zustand versetzt.

Der inaktive Zustand kann jeder Zustand sein, in dem ein Teil der Elektronik heruntergefahren und/oder in einem Ruhezustand ist. Hier und vorzugsweise ist in dem inaktiven Zustand zumindest ein Primärmotor der landwirtschaftlichen Arbeitsmaschine nicht aktiv. Zusätzlich oder alternativ kann die landwirtschaftliche Arbeitsmaschine abgeschlossen sein. Hier und vorzugsweise ist der inaktive Zustand ein Zustand, in dem die landwirtschaftliche Arbeitsmaschine üblicherweise mehrere Tage, Wochen oder Monate verbleiben kann, ohne dass anschließend die Batterie leer ist oder die landwirtschaftliche Arbeitsmaschine sich automatisch in einen anderen inaktiven Zustand versetzt. In dem inaktiven Zustand kann eine Verarbeitungsgeschwindigkeit, insbesondere eine Taktgeschwindigkeit, des Elektronikbestandteils oder eine Taktung eines Sensors des Elektronikbestandteils oder dergleichen gegenüber dem aktiveren Zustand reduziert sein.

In der Nutzerlokalisierungsroutine wird auf Basis von Sensordaten des Sensors geprüft, ob der Nutzer gerade dabei ist, die landwirtschaftliche Arbeitsmaschine zu besteigen, insbesondere eine Leiter der landwirtschaftlichen Arbeitsmaschine, die zur Fahrerkabine führt, zu besteigen oder die Fahrerkabine zu betreten. Das Ergebnis der Prüfung ist positiv, wenn die Steueranordnung erkennt, dass der Nutzer, den Sensordaten nach, gerade die landwirtschaftliche Arbeitsmaschine besteigt oder in die Fahrerkabine einsteigt. Es können beide Prüfungen oder nur eine der Prüfungen implementiert sein. Im ersten Fall dient die zweite Prüfung als Backup, falls die erste Prüfung den Nutzer nicht erkannt hat.

Der aktivere Zustand ist elektronisch aktiver als der inaktive Zustand. Hier und vorzugsweise ist der aktivere Zustand nicht der Zustand, in dem der Nutzer den Elektronikbestandteil üblicherweise bedient, sondern ein Zwischenzustand. Ein vollständiges Hochfahren des Elektronikbestandteils aus dem aktiveren Zustand dauert weniger lang, vorzugsweise höchstens halb so lang, wie aus dem inaktiven Zustand.

Interessant ist die Möglichkeit gemäß Anspruch 2, die Elektronikbestandteile zwar hochzufahren, jedoch noch nicht sichtbar zu aktivieren. Dadurch erhält der Nutzer den Eindruck einer besonders schnell auf seine Eingabe reagierenden Elektronik.

Besonders kostengünstig ist die Variante nach Anspruch 3, wonach ein Beschleunigungssensor einer Diebstahlsicherung verwendet wird, um zu erkennen, ob der Nutzer die landwirtschaftliche Arbeitsmaschine besteigt. So ist kein eigener Sensor notwendig und durch das Klettern des Nutzers ausgelöste Stöße bzw. Wankbewegungen sind gut erkennbar.

Die Ansprüche 4 und 5 geben weitere bevorzugte Ausgestaltungen an.

Im Folgenden wird die Erfindung anhand einer lediglich ein Ausführungsbeispiel darstellenden Zeichnung näher erläutert. In der Zeichnung zeigt
- Fig. 1: eine landwirtschaftliche Arbeitsmaschine mit einer Steueranordnung zur Durchführung einer Nutzerlokalisierungsroutine und zur Aktivierung einer Elektronik und
- Fig. 2: ein Ablaufdiagramm mit einer Autorisierungsroutine und einer Nutzerlokalisierungsroutine.

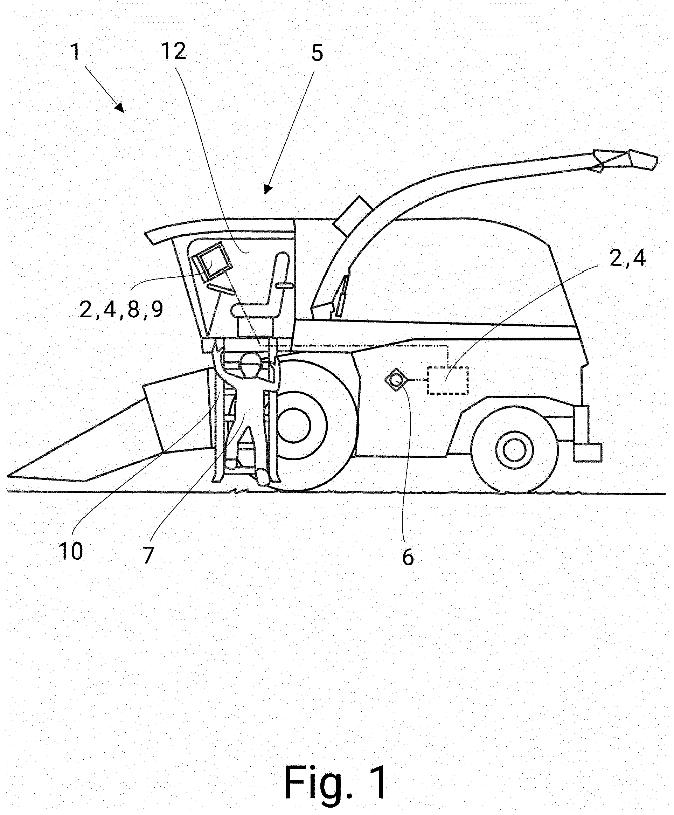

Fig. 1 zeigt eine landwirtschaftliche Arbeitsmaschine 1 mit einer Steueranordnung 2 zur Durchführung einer Nutzerlokalisierungsroutine 3 und zur Aktivierung einer Elektronik 4.

Das in Fig. 1 dargestellte und insoweit bevorzugte Ausführungsbeispiel betrifft eine als Feldhäcksler ausgeführte landwirtschaftliche Arbeitsmaschine 1 mit einer Fahrerkabine 5, wobei die landwirtschaftliche Arbeitsmaschine 1 eine Steueranordnung 2 und Elektronik 4 in der Fahrerkabine 5 aufweist, wobei die landwirtschaftliche Arbeitsmaschine 1 mindestens einen Sensor 6 aufweist, mit dem ein Nutzer 7 lokalisierbar ist.

Die Steueranordnung 2 beinhaltet Elektronik 4, die innerhalb der Fahrerkabine 5 und im Bauch der landwirtschaftlichen Arbeitsmaschine 1 angeordnet ist. Innerhalb der Fahrerkabine 5 ist hier ein Nutzerinterface 8 dargestellt, über welches ein Nutzer 7 beispielsweise Informationen über Betriebszustände und/oder Einstellungen der landwirtschaftlichen Arbeitsmaschine 1 erhalten kann oder Eingaben bzw. Bedienvorgaben tätigen kann. Über das Nutzerinterface 8 können beispielsweise auch Einstellungen der Sitzposition, der Fahrerkabinenklimatisierung oder eines Multimediasystems vorgenommen werden. Um Energie zu sparen und die Batterie der landwirtschaftlichen Arbeitsmaschine 1 zu schonen, ist die landwirtschaftliche Arbeitsmaschine 1 und mit ihr zumindest ein Teil ihrer Elektronik 4 in einem inaktiven Zustand, wenn kein autorisierter Nutzer 7 anwesend ist. In dem inaktiven Zustand der landwirtschaftlichen Arbeitsmaschine 1 ist zumindest ein Teil der Elektronik 4 heruntergefahren und/oder in einem Ruhezustand und der Primärmotor der landwirtschaftlichen Arbeitsmaschine 1 ist vorzugsweise inaktiv.

Wesentlich ist nun, dass die Steueranordnung 2 in einem inaktiven Zustand der landwirtschaftlichen Arbeitsmaschine 1 eine Nutzerlokalisierungsroutine 3 durchführt, dass die Steueranordnung 2 in der Nutzerlokalisierungsroutine 3 anhand von Sensordaten des Sensors 6 prüft, ob der Nutzer 7 die landwirtschaftliche Arbeitsmaschine 1 besteigt und/oder die Fahrerkabine 5 betritt und dass die Steueranordnung 2 bei positivem Ergebnis der Prüfung zumindest einen Elektronikbestandteil 9 der Elektronik 4 in der Fahrerkabine 5 aus einem inaktiven Zustand in einen aktiveren Zustand versetzt. Der Elektronikbestandteil 9 ist hier und vorzugsweise im inaktiven Zustand für den Nutzer 7 aus der Fahrerkabine 5 heraus, theoretisch, als inaktiv erkennbar, beispielsweise ein abgeschalteter Bildschirm. Hier und vorzugsweise ist der Elektronikbestandteil 9 Teil des Nutzerinterfaces 8 oder das gesamte Nutzerinterface 8 ist der Elektronikbestandteil 9 und die genannten Funktionen sind vorzugsweise im inaktiven Zustand des Elektronikbestandteils 9 nicht erreichbar oder bedienbar.

In der in Fig. 1 gezeigten Variante ist der Sensor 6 ein Beschleunigungssensor einer Diebstahlsicherung mittels dessen Stöße und/oder Wankbewegungen der landwirtschaftlichen Arbeitsmaschine 1 erfasst werden können. Besteigt ein Nutzer 7 nun beispielsweise die Leiter 10 der landwirtschaftlichen Arbeitsmaschine 1, so detektiert der Sensor 6 der Diebstahlsicherung Beschleunigungen, welche mittels der Steueranordnung 2 in der Nutzerlokalisierungsroutine 3 ausgewertet werden. In der Nutzerlokalisierungsroutine 3 wird geprüft, ob die detektierten Beschleunigungswerte einem entsprechenden Muster eines Besteigens der landwirtschaftlichen Arbeitsmaschine 1 durch einen Nutzer 7 entsprechen. Ist das Ergebnis der Prüfung positiv, so wird beispielsweise das Nutzerinterface 8 in einen aktiven Zustand versetzt und kann nach dem Betreten der Fahrerkabine 5, vorzugsweise ohne wahrnehmbare Wartezeit, durch den Nutzer 7 bedient werden und/oder Informationen können auf dem Nutzerinterface 8 angezeigt werden.

Weiter ist hier und vorzugsweise vorgesehen, dass die Elektronik 4 in der Fahrerkabine 5 als den Elektronikbestandteil 9 mindestens ein Nutzerinterface 8, insbesondere ein Display, und/oder ein Multimedia-System und/oder ein Fahrerassistenzsystem und/oder ein Steuergerät und/oder eine Beleuchtung aufweist.

Zusätzlich oder alternativ ist vorgesehen, dass die Steueranordnung 2 den Elektronikbestandteil 9 in Reaktion auf eine Nutzeraktion, insbesondere eine Aktivierung des jeweiligen Teils der Elektronik 4, aus dem aktiveren Zustand in einen aktiven Zustand versetzt, in dem der Elektronikbestandteil 9 einsatzbereit ist. Es ist dabei vorzugsweise so, dass der aktivere Zustand für den Nutzer 7 nicht optisch erkennbar ist. Dafür erfolgt der Übergang zwischen dem inaktiven Zustand und dem aktiveren Zustand vor dem Nutzer 7 versteckt.

Hier und vorzugsweise ist der Elektronikbestandteil 9 im aktiveren Zustand nicht vollständig einsatzbereit. Insbesondere ist ein Display zwar aktiviert, zeigt jedoch noch kein Bild und/oder weiterhin den gleichen, insbesondere dunklen, Bildschirm wie im inaktiven Zustand. So gewinnt der Nutzer 7 den Eindruck, die Elektronik 4 würde auf eine Nutzeraktion hin, insbesondere ein Einschalten des Displays, extrem schnell reagieren. Entsprechend wird hier und vorzugsweise auf eine Nutzeraktion hin der Elektronikbestandteil 9 in einen aktiven Zustand, der aktiver ist als der aktivere Zustand, versetzt. Der aktive Zustand ist vorzugsweise der normale Betriebszustand.

Es ist alternativ oder zusätzlich möglich, dass der Sensor 6 ein optischer Sensor 6, insbesondere eine Kamera, oder ein akustischer Sensor 6 oder ein Bewegungssensor, insbesondere ein Infrarot-Sensor, oder ein Beschleunigungssensor ist, vorzugsweise, dass der Beschleunigungssensor eine Beschleunigung der landwirtschaftlichen Arbeitsmaschine 1 und/oder der Fahrerkabine 5 misst, weiter vorzugsweise, dass der Beschleunigungssensor zusätzlich von einem Diebstahlsicherungssystem der landwirtschaftlichen Arbeitsmaschine 1 verwendet wird, beispielsweise um gegebenenfalls eine Alarmfunktion auszulösen.

Einer oder mehrere der genannten Sensoren 6 können auch kombiniert werden. Der eine oder die mehreren Sensoren 6 kann oder können in der Fahrerkabine 5 angeordnet sein.

Ebenso kann vorgesehen sein, dass die Steueranordnung 2 in einem inaktiven Zustand der landwirtschaftlichen Arbeitsmaschine 1 eine Autorisierungsroutine 11 durchführt, dass die Steueranordnung 2 in der Autorisierungsroutine 11 prüft, ob ein den Nutzer 7 autorisierendes mobiles Gerät, insbesondere ein Schlüssel oder ein Smartphone, in einer Umgebung der landwirtschaftlichen Arbeitsmaschine 1 vorhanden ist, dass die Steueranordnung 2 die Nutzerlokalisierungsroutine 3 nur durchführt, wenn das Ergebnis der Prüfung positiv ist.

Die Autorisierungsroutine 11 kann zusätzlich ein Entriegeln der landwirtschaftlichen Arbeitsmaschine 1, insbesondere einer Fahrerkabinentür 12, bei positivem Prüfungsergebnis umfassen und/oder anderweitige Aktionen auslösen.

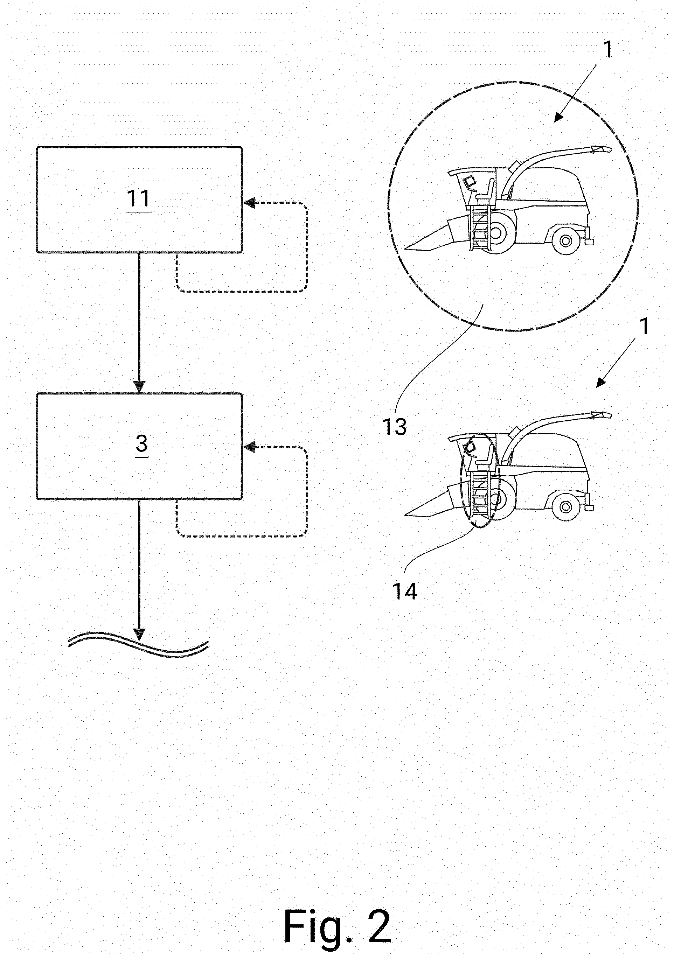

Ein Ablaufdiagramm mit einer Autorisierungsroutine 11 und einer Nutzerlokalisierungsroutine 3 ist in Fig. 2 dargestellt. Die Elektronik 4 einer abgestellten bzw. nicht im Betrieb befindlichen landwirtschaftlichen Arbeitsmaschine 1 befindet sich in einem inaktiven Zustand, in welchem zunächst eine Autorisierungsroutine 11 fortlaufend oder intermittierend ausgeführt wird. Nähert sich ein Nutzer 7 der landwirtschaftlichen Arbeitsmaschine 1 und wird mittels eines mitgeführten autorisierten mobilen Geräts, zum Beispiel eines Smartphones, erkannt, wird die Fahrerkabinentür 12 der landwirtschaftlichen Arbeitsmaschine 1 entriegelt und die Nutzerlokalisierungsroutine 3 wird gestartet und fortlaufend durchgeführt. In dieser wird dann überprüft, ob der autorisierte Nutzer 7 die landwirtschaftliche Arbeitsmaschine 1 besteigt. Wird ein Besteigen erkannt, wird die Elektronik 4 in einen aktiveren Zustand versetzt. Wird innerhalb einer bestimmten Zeit innerhalb der Nutzerlokalisierungsroutine 3 kein Besteigen der landwirtschaftlichen Arbeitsmaschine 1 erkannt, kann die Fahrerkabinentür 12 automatisch verriegelt werden und zurück zur Autorisierungsroutine 11 gesprungen werden.

Auf der rechten Seite der Fig. 2 sind die Erfassungsbereiche der links dargestellten Routinen jeweils angedeutet. Der Erfassungsbereich des für die Autorisierungsroutine 11 genutzten Sensors 6 ist hier größer als der Erfassungsbereich des für die Nutzerlokalisierungsroutine 3 genutzten Sensors 6. Der Erfassungsbereich der Autorisierungsroutine 13 umfasst hier einen die landwirtschaftliche Arbeitsmaschine 1 umgebenden Raum, wobei der Abstand von dem Nutzer 7 zu der landwirtschaftlichen Arbeitsmaschine 1 mehrere Meter betragen kann. Der Erfassungsbereich der Nutzerlokalisierungsroutine 14 beschränkt sich auf einen kleineren Raum, der sich, wie hier beispielsweise angedeutet, auf einen Bereich um die Leiter 10 zur Fahrerkabine 5 beschränkt. Der Sensor 6 könnte dafür auch in der Leiter 10 angeordnet sein.

Der Vollständigkeit halber wird angemerkt, dass für die Autorisierungsroutine 11 und die Nutzerlokalisierungsroutine 3 nur ein Sensor 6 verwendet werden kann, wobei die Empfindlichkeit und/oder der Erfassungsbereich des Sensors 6 für die jeweilige Routine geändert werden kann oder andere Schwellwerte in der Auswertung der Signale verwendet werden können. Genauso bevorzugt können auch zwei unterschiedliche Sensoren 6 verwendet werden.

Weiter ist hier und vorzugsweise vorgesehen, dass die Steueranordnung 2 mehrere Nutzer 7 über ihnen zugeordnete mobile Geräte unterscheidet, dass die Steueranordnung 2 abhängig von dem erkannten Nutzer 7 mindestens einen Elektronikbestandteil 9 unterschiedlich in den aktiveren oder aktiven Zustand versetzt und/oder unterschiedlich konfiguriert.

Hier und vorzugsweise wird ein Sitz und/oder eine Klimaanlage und/oder ein Rückspiegel und/oder ein Radio abhängig von dem erkannten Nutzer 7 unterschiedlich konfiguriert, beispielsweise wird eine Sitzposition, eine bevorzugte Temperatur, eine Ausrichtung des Rückspiegels oder ein Radiosender eingestellt.

### Bezugszeichenliste

- 1: Landwirtschaftliche Arbeitsmaschine
- 2: Steueranordnung
- 3: Nutzerlokalisierungsroutine
- 4: Elektronik
- 5: Fahrerkabine
- 6: Sensor
- 7: Nutzer
- 8: Nutzerinterface
- 9: Elektronikbestandteil
- 10: Leiter
- 11: Autorisierungsroutine
- 12: Fahrerkabinentür
- 13: Erfassungsbereich der Autorisierungsroutine
- 14: Erfassungsbereich der Nutzerlokalisierungsroutine

## Patentansprüche

1. Landwirtschaftliche Arbeitsmaschine mit einer Fahrerkabine (5), wobei die landwirtschaftliche Arbeitsmaschine (1) eine Steueranordnung (2) und Elektronik (4) in der Fahrerkabine (5) aufweist, wobei die landwirtschaftliche Arbeitsmaschine (1) mindestens einen Sensor (6) aufweist, mit dem ein Nutzer (7) lokalisierbar ist,
**dadurch gekennzeichnet,**
**dass** die Steueranordnung (2) in einem inaktiven Zustand der landwirtschaftlichen Arbeitsmaschine (1) eine Nutzerlokalisierungsroutine (3) durchführt, dass die Steueranordnung (2) in der Nutzerlokalisierungsroutine (3) anhand von Sensordaten des Sensors (6) prüft, ob der Nutzer (7) die landwirtschaftliche Arbeitsmaschine (1) besteigt und/oder die Fahrerkabine (5) betritt,
**dass** die Steueranordnung (2) bei positivem Ergebnis der Prüfung zumindest einen Elektronikbestandteil (9) der Elektronik (4) in der Fahrerkabine (5) aus einem inaktiven Zustand in einen aktiveren Zustand versetzt.

2. Landwirtschaftliche Arbeitsmaschine nach Anspruch 1, **dadurch gekennzeichnet,**
**dass** die Elektronik (4) in der Fahrerkabine (5) als den Elektronikbestandteil (9) mindestens ein Nutzerinterface (8), insbesondere ein Display, und/oder ein Multimedia-System und/oder ein Fahrerassistenzsystem und/oder ein Steuergerät und/oder eine Beleuchtung aufweist, und/oder, dass die Steueranordnung (2) den Elektronikbestandteil (9) in Reaktion auf eine Nutzeraktion, insbesondere eine Aktivierung des jeweiligen Teils der Elektronik (4), aus dem aktiveren Zustand in einen aktiven Zustand versetzt, in dem der Elektronikbestandteil (9) einsatzbereit ist, vorzugsweise, dass der aktivere Zustand für den Nutzer (7) nicht optisch erkennbar ist.

3. Landwirtschaftliche Arbeitsmaschine nach Anspruch 1 oder 2, **dadurch gekennzeichnet, dass** der Sensor (6) ein optischer Sensor (6), insbesondere eine Kamera, oder ein akustischer Sensor (6) oder ein Bewegungssensor, insbesondere ein Infrarot-Sensor, oder ein Beschleunigungssensor ist, vorzugsweise, dass der Beschleunigungssensor eine Beschleunigung der landwirtschaftlichen Arbeitsmaschine (1) und/oder der Fahrerkabine (5) misst, weiter vorzugsweise, dass der Beschleunigungssensor zusätzlich von einem Diebstahlsicherungssystem der landwirtschaftlichen Arbeitsmaschine (1) verwendet wird.

4. Landwirtschaftliche Arbeitsmaschine nach einem der vorhergehenden Ansprüche,
**dadurch gekennzeichnet, dass** die Steueranordnung (2) in einem inaktiven Zustand der landwirtschaftlichen Arbeitsmaschine (1) eine Autorisierungsroutine (11) durchführt, dass die Steueranordnung (2) in der Autorisierungsroutine (11) prüft, ob ein den Nutzer (7) autorisiertes mobiles Gerät, insbesondere ein Schlüssel oder ein Smartphone, in einer Umgebung der landwirtschaftlichen Arbeitsmaschine (1) vorhanden ist, dass die Steueranordnung (2) die Nutzerlokalisierungsroutine (3) nur durchführt, wenn das Ergebnis der Prüfung positiv ist.

5. Landwirtschaftliche Arbeitsmaschine nach Anspruch 4, **dadurch gekennzeichnet,**
**dass** die Steueranordnung (2) mehrere Nutzer (7) über ihnen zugeordnete mobile Geräte unterscheidet, dass die Steueranordnung (2) abhängig von dem erkannten Nutzer (7) mindestens einen Elektronikbestandteil (9) unterschiedlich in den aktiveren oder aktiven Zustand versetzt und/oder unterschiedlich konfiguriert.
